# FASCICULE DE BREVET EUROPEEN

(11) **EP 1 380 785 B1**
(45) Date de publication et mention de la délivrance du brevet: **21.09.2005**
(21) Numéro de dépôt: 02291739.7
(22) Date de dépôt: 10.07.2002
(51) Int. Cl.: F16L 3/10

(54) **Collier de tuyauterie, en matière plastique**
Schelle für Rohre aus Kunststoff
Pipe clamp made of plastic

(43) Date de publication de la demande: 14.01.2004
(73) Titulaire: Weiss, Jacques, F-92380 Garches (FR)
(72) Inventeur: Weiss, Jacques, F-92380 Garches (FR)
(74) Mandataire: Chameroy, Claude

(56) Documents cités:
- DE-A- 3 824 197
- DE-U- 7 225 205
- DE-U- 9 312 223
- FR-A- 2 280 011

## Description

La présente invention concerne un collier de tuyauterie, en matière plastique, du type comprenant deux demi-colliers sensiblement semi-circulaires, à savoir une embase destinée à être fixée sur une paroi et un étrier amovible venant s'assembler sur l'embase par des moyens appropriés en enserrant la tuyauterie, l'embase étant fixée sur la paroi par l'intermédiaire d'un sabot du collier dans lequel elle vient s'emboîter.

Il existe à l'heure actuelle de nombreux modèles de colliers de ce type. La plupart sont métalliques, mais il en existe également en matière plastique, comme décrit par exemple dans DE 3824197. Toutefois, lorsqu'ils sont en matière plastique, les colliers doivent avoir une certaine épaisseur et/ou des formes spéciales afin de présenter une rigidité et une solidité suffisante, en particulier dans les grands diamètres. Ils sont donc en définitive relativement difficiles à fabriquer, et donc coûteux, en raison notamment des problèmes de moulage que cela implique.

La présente invention a donc pour but principal de remédier à ces inconvénients et, pour ce faire, elle a pour objet un collier de tuyauterie du type susmentionné qui se caractérise essentiellement en ce que le sabot du collier est pourvu d'au moins deux lumières en usage verticalement alignées, tandis que l'embase est pourvue d'au moins deux crochets aptes à venir en prise sur le bord inférieur des deux lumières.

De préférence, les crochets sont munis d'une partie saillante destinée à venir s'engager élastiquement dans une rainure du sabot.

L'embase et le sabot restent ainsi parfaitement solidaires, même en présence de vibrations.

Selon une autre caractéristique de l'invention, le sabot du collier est conçu pour recevoir plusieurs diamètres de colliers.

Cette disposition contribue à diminuer encore le prix de revient des colliers en diminuant les frais de stockage. De plus, comme les sabots sont réalisés à l'identique en plus grande quantité, leur prix de fabrication est également plus faible.

Une forme d'exécution de l'invention est décrite ci-après à titre d'exemple, en référence aux dessins annexés dans lesquels :
- la figure 1 est une vue en perspective éclatée d'un collier de tuyauterie conforme à l'invention ; et
- la figure 2 est une vue en coupe de ce collier.

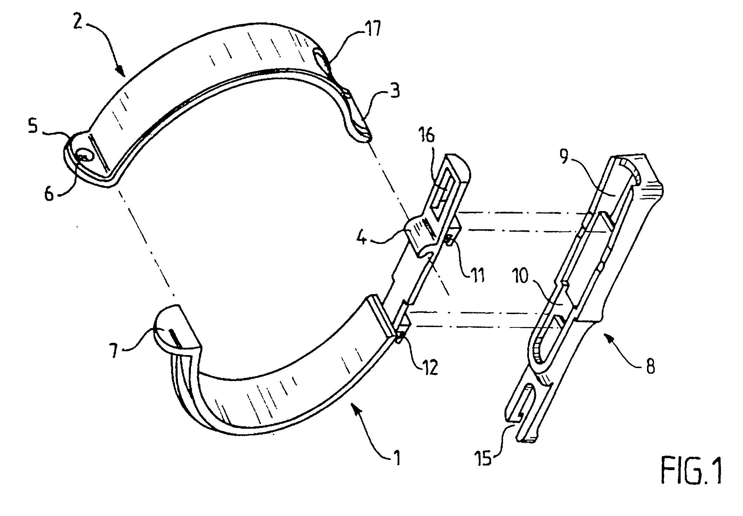

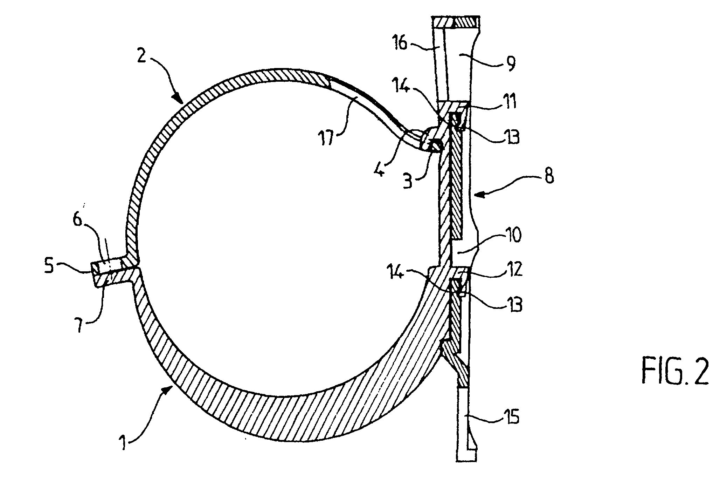

Le collier en matière plastique représenté sur les figures 1 et 2 comprend tout d'abord deux demi-colliers sensiblement semi-circulaires, à savoir une embase 1 destinée à être fixée sur une paroi de support et un étrier amovible 2 venant s'assembler sur l'embase 1 afin d'enserrer une tuyauterie quelconque. A cet effet, l'étrier 2 est pourvu à une extrémité d'un axe 3 venant tourillonner dans une portée 4 aménagée sur l'embase 1, et à l'autre extrémité d'une oreille 5 percée d'un trou 6 pour recevoir une vis non représentée destinée à venir se visser dans une oreille correspondante 7 de l'embase 1.

Conformément à l'invention, l'embase 1 est fixée sur la paroi de support par l'intermédiaire d'un sabot 8 dans lequel elle vient s'emboîter. A cet effet, le sabot 8 est pourvu de deux lumières 9 et 10 alignées verticalement, tandis que l'embase 1 est pourvue de deux crochets 11 et 12 aptes à venir en prise sur le bord inférieur des deux lumières 9, 10. De plus, chacun des crochets 11 et 12 est muni d'une partie saillante intérieure 13 destinée à venir s'engager élastiquement dans une rainure 14 prévue à cet effet dans le sabot 8. L'embase 1 reste ainsi solidaire du sabot 8 en cas de vibrations.

La fixation de l'ensemble sur la paroi de support s'effectue par exemple au moyen de vis coopérant respectivement avec une ouverture 15 aménagée à la partie inférieure du sabot et avec une ouverture 16 aménagée à la partie supérieure de l'embase 1 en regard de la lumière 9 du sabot. On notera en outre que lors d'un démontage éventuel, il est possible d'avoir accès plus facilement à la vis supérieure à travers une ouverture 17 de l'étrier 2.

Enfin, et conformément à une autre particularité de la présente invention, le sabot 8 peut être commun à plusieurs diamètres de colliers, ce qui réduit encore les frais de fabrication ainsi que les frais de stockage.

## Revendications

1. Collier de tuyauterie, en matière plastique, du type comprenant deux demi-colliers sensiblement semi-circulaires, à savoir une embase (1) destinée à être fixée sur une paroi et un étrier amovible (2) venant s'assembler sur l'embase (1) par des moyens appropriés en enserrant la tuyauterie, l'embase (1) étant fixée sur la paroi par l'intermédiaire d'un sabot du collier (8) dans lequel elle vient s'emboîter, **caractérisé en ce que** le sabot du collier (8) est pourvu d'au moins deux lumières (9, 10) en usage verticalement alignées, tandis que l'embase (1) est pourvue d'au moins deux crochets (11, 12) aptes à venir en prise sur le bord inférieur des deux lumières (9, 10).

2. Collier de tuyauterie selon la revendication 1, **caractérisé en ce que** les crochets (11, 12) sont munis d'une partie saillante (13) destinée à venir s'engager élastiquement dans une rainure (14) du sabot du collier (8).

3. Collier de tuyauterie selon la revendication 1 ou 2, **caractérisé en ce que** le sabot du collier (8) est conçu pour recevoir plusieurs diamètres de colliers.

## Patentansprüche

1. Rohrleitungsschelle aus Kunststoff des Typs, der zwei im Wesentlichen halbkreisförmige Halbschellen umfasst, nämlich einen Sockel (1), der dazu bestimmt ist, auf einer Wand befestigt zu werden, und einen abnehmbaren Bügel (2), der auf den Sockel (1) durch entsprechende Mittel gefügt wird, wobei die Rohrleitung eingeschlossen wird, wobei der Sockel (1) an der Wand über einen Schuh der Schelle (8) befestigt wird, in den sie einrastet, **dadurch gekennzeichnet, dass** der Schuh der Schelle (8) mit mindestens zwei Langlöchern (9, 10) versehen ist, die beim Gebrauch senkrecht gefluchtet sind, während der Sockel (1) mit mindestens zwei Haken (11, 12) versehen ist, die auf dem unteren Rand der zwei Langlöcher (9, 10) eingreifen können.

2. Rohrleitungsschelle nach Anspruch 1, **dadurch gekennzeichnet, dass** die Haken (11, 12) mit einem vorstehenden Teil (13) versehen sind, der dazu bestimmt ist, sich elastisch in eine Rille (14) des Schuhs der Schelle (8) einzufügen.

3. Rohrleitungsschelle nach Anspruch 1 oder 2, **dadurch gekennzeichnet, dass** der Schuh der Schelle (8) konzipiert ist, um mehrere Schellendurchmesser aufzunehmen.

## Claims

1. A pipe clamp made of plastic material, of the type comprising two substantially semi-circular half-clamps, namely a base (1) designed for being fastened onto a wall and a removable stirrup (2) that fits together with the base (1) by appropriate means while holding the pipe tight, the base (1) being fastened onto the wall through a clamp shoe (8), into which it fits, **characterized in that** the clamp shoe (8) is provided with at least two holes (9, 10), which are vertically aligned when in use, whereas the base (1) is provided with at least two hooks (11, 12) engageable with the lower edge of the two holes (9, 10).

2. The pipe clamp according to claim 1, **characterized in that** the hooks (11, 12) are provided with a protruding portion (13) for elastically engaging into a groove (14) of the clamp shoe (8).

3. The pipe clamp according to claim 1 or 2, **characterized in that** the clamp shoe (8) is designed for receiving several clamp diameters.
